# EUROPÄISCHE PATENTSCHRIFT

(11) **EP 1 731 013 B1**
(45) Veröffentlichungstag und Bekanntmachung des Hinweises auf die Patenterteilung: **12.03.2008**
(21) Anmeldenummer: 06009700.3
(22) Anmeldetag: 10.05.2006
(51) Int. Cl.: A01D 34/00

(54) **Mulchmähdeck**
Mulching mowerdeck
Carter de faucheuse de paillage

(30) Priorität: 10.06.2005 DE 102005026995; 18.10.2005 DE 102005050215
(43) Veröffentlichungstag der Anmeldung: 13.12.2006
(73) Patentinhaber: Wiedenmann GmbH, 89192 Rammingen (DE)
(72) Erfinder:
(74) Vertreter: Kastel, Stefan

(56) Entgegenhaltungen:
- EP-B- 0 748 154
- DE-C1- 4 434 272
- FR-A- 2 643 213

## Beschreibung

Die Erfindung betrifft ein Mulchmähdeck mit den Merkmalen des Oberbegriffes des beigefügten Patentanspruches 1, wie es aus der EP 0 748 154 B1 bekannt ist.

Unter Mähdecks werden grundsätzlich Mähgeräte bezeichnet, welche zum Mähen größerer Flächen geeignet sind und hierzu eine Mehrzahl von nebeneinander angeordneten Schneidmessern aufweisen. Es gibt hierzu insbesondere Mähdecks, die das geschnittene Gut seitwärts oder am Heck auswerfen, wo es aufgenommen wird und einem Sammelbehälter zugeführt wird. Andererseits sind jedoch seit längerem auch sogenannte Mulchmäher bekannt, welche in der Mulchbetriebsart keinen Auswurf haben, sondern das Grasschnittgut durch mehrmaliges Schneiden so stark zerkleinern, dass es auf der gemähten Fläche liegen bleiben kann und somit auch als Dünger verwendbar ist.

Die vorstehend erwähnte EP 0 748 154 B1 beschreibt ein Mulchmähdeck mit mehreren Schneidmessern. Eine Manteleinrichtung ist eng um die Bewegungsbahn der Schneidmesser herum geführt und begrenzt so im wesentlichen zylinderförmige Schneidkammern. Bei dem bekannten Mähdeck ist die Manteleinrichtung jedoch nicht am gesamten Umfang um jedes Schneidmesser vorhanden, sondern in einem Übergangsbereich zwischen zwei benachbarten Schneidmessern ausgespart. Jeweils benachbarte Schneidkammern sind so miteinander offen verbunden. Das Aussparen der Manteleinrichtung zwischen den Schneidmessern hat zum einen den Vorteil, dass die Schneidmesser näher zueinander geführt werden können. Die Schnittbahnen der Schneidmesser können sich so nicht nur bei einer reinen Vorwärtsfahrt des Mähdecks überschneiden, sondern auch bei den meisten Kurvenfahrten.

Darüber hinaus kann so Grasschnittgut von einer Schneidkammer in eine benachbarte Schneidkammer überführt werden. Zum gezielten Überführen sind bei dem aus der EP 0 748 154 B1 bekannten Schneiddeck Überleiteinrichtungen vorhanden, die ein solches Überführen gezielt vornehmen. Die Überleiteinrichtungen sind hierbei als aufsteigende und wieder abfallende Rampen ausgeführt, welche im Querschnitt wie zwei zusammengelegte gleiche Dreiecke geformt sind. Die durch die fehlende Manteleinrichtung in diesen Überleitbereichen tangential abstrebenden Grasschnittgutpartikel erhalten so durch die Rampen noch eine Ableitung nach unten, so dass sie beim Überführen von einer Schneidkammer in die benachbarte Schneidkammer auch nach unten abgelenkt werden und durch das Schneidmesser der benachbarten Schneidkammer noch einmal geschnitten werden.

Bei dem bekannten Mähdeck werden so die in einer Kammer geschnittenen Grasschnittpartikeln einerseits durch die Manteleinrichtung dicht bei den Schneidmessern gehalten, andererseits in den Überleitungsbereichen zwischen den Kammern hin- und hergeworfen und dabei jedes Mal von einem Bereich nahe an der Unterseite des Mähdeckes in die zu der Unterseite beabstandeten kreisförmigen Bewegungsbahnen der Schneidmesser zurückgeführt. Hierdurch erfahren auch diejenigen Partikel, welche in einer äußeren Schneidkammer geschnitten werden, eine Verteilung über das gesamte Schneiddeck, wodurch sie mehrfach geschnitten werden und wirksam am Boden, unterhalb der verbleibenden Grashalme abgelegt werden.

Aufgabe der Erfindung ist es, ein Mulchmähdeck mit den Merkmalen des Oberbegriffes des beigefügten Patentanspruches 1 noch hinsichtlich seiner Mulchwirkung zu verbessern.

Diese Aufgabe wird durch ein Mulchmähdeck mit den Merkmalen des Patentanspruches 1 gelöst.

Vorteilhafte Ausgestaltungen der Erfindung sind Gegenstand der Unteransprüche.

Erfindungsgemäß ist wie im Stand der Technik zwischen benachbarten Schneidkammern ein Überleitbereich vorgesehen, in dem die Manteleinrichtung ausgespart ist. Eine dort befindliche Überleiteinrichtung ist jedoch nicht mehr mit Rampen versehen, sondern weist eine erste Leitwand auf, die einen Teil des zwischen dem Schneidmesser und der Unterseite des Mähdecks rotierenden Schnittgutes abfängt und gezielt in die benachbarte Schneidkammer überleitet. Die erste Leitwand ist hierzu zumindest teilweise radial einwärts der Bewegungsbahn der Schneidmesserenden in der einen Schneidkammer angeordnet. Sie befindet sich oberhalb der Bewegungsbahn der Schneidmesserenden zwischen der Unterseite des Schneiddeckes und dem Schneidmesser. Anstelle einer rein tangentialen Erstreckung ist die Leitwand zu der tangentialen Bewegungsrichtung des Grasschnittgutes in einem spitzen Winkel geneigt. Es wäre zwar auch rein tangentiale Erstreckung denkbar. Wenn man aber die erste Leitwand zu der tangentialen Richtung weg in Richtung auf die benachbarte Schneidkammer hin in einem spitzen Winkel verlaufen lässt, stellt sich diese Leitwand der kreisförmig zirkulierenden Luft oberhalb der Schneidmessern in den Weg. Die Luft prallt anders als bei einer tangentialen Ausrichtung auf die Leitwand und wird gezielt in die andere Schneidkammer überführt. Dadurch gibt es eine Leitfunktion und zusätzlich eine Verwirbelung, die Ausbildung einer laminaren Strömung wird vermieden. Der Überleitbereich kann andererseits vollkommen offengehalten werden, so dass eine größere Menge von Schnittgut von einer Kammer in die benachbarte andere Schneidkammer überführt werden kann.

Dies erfolgt jedoch mit der durch die Leitwand verwirbelten Luft, so dass das Grasschnittgut nicht nur oberhalb der Schneidmesser verbleibt, sondern sich chaotisch verteilt.

Obwohl in der bevorzugten Ausführungsform auf die Überleitrampe verzichtet worden ist und damit auf den durch eine solche Rampe erzielbaren Bewegungsstoß nach unten verzichtet worden ist, welcher im Stand der Technik nach der EP 0 748 154 B1 und auch nach der US 5 212 938 sowie der WO 92/02 121 noch als höchst vorteilhaft zum Erzielen einer guten Mulchwirkung angesehen worden ist, lässt sich durch diese Ausbildung noch eine um einiges bessere Mulchwirkung erzielen. Auch höheres und feuchteres Gras lässt sich mit dem erfindungsgemäßen Mulchmähdeck noch mulchmähen, ohne dass Grasschnittgut oben auf dem geschnittenen Gras mit größeren Stücken verbleibt, wie dies bei zum Vergleich herangezogenen Mulmähdecks gemäß dem Stand der Technik bei höherem und feuchterem Gras der Fall war.

Aufgrund der ersten Leitwand und der dadurch sich ergebenden gezielten Überführung und Verwirbelung kann man den Überleitbereich zwischen den Schneidkammern mit größerem Überleitungsquerschnitt versehen und so das Schnittgut wirksamer zwischen den Kammern verteilen.

Die Leitwand erstreckt sich vorzugsweise über der Bewegungsbahn eines Endbereiches des Schneidmessers bis hin zu einer Spitze, in welcher die die benachbarten Schneidkammern begrenzenden Mantelbereiche der Manteleinrichtung auslaufen. Die erste Leitwand könnte dabei voll hin zu der Spitze laufen, es kann aber auch ein geringer Abstand zwischen dieser Spitze und der ersten Leitwand vorhanden sein.

Ein solcher Abstand kann zur weiteren Verwirbelung der Luft beitragen. Er ergibt sich auch bei einer vorteilhaften, bei kostengünstigen Herstellung der Überleiteinrichtung von selbst. Die Überleiteinrichtung lässt sich am einfachsten dadurch herstellen, dass man ein flächiges Materialstück, bevorzugt das Blech, mit einem Steg, welcher zur Befestigung an der Unterseite des Schneiddeckes dient, derart abwinkelt, dass ein die erste Leitwand bildender Schenkel ausgebildet ist.

Vorzugsweise bewegen sich die Schneidmesserenden der Schneidmesser der benachbarten Schneidkammern im Überleitungsbereich gegenläufig zueinander, wie dies grundsätzlich bereits aus dem Stand der Technik bekannt ist. Dies sorgt für eine weitere heftige Verwirbelung. Insbesondere für solche Fälle ist dann auch vorteilhaft, wenn die Überleiteinrichtung nicht nur eine erste Leitwand in der einen Schneidkammer, sondern auch noch eine zweite Leitwand in der benachbarten zweiten Schneidkammer aufweist. Diese zweite Leitwand könnte grundsätzlich unterschiedlich zu der ersten Leitwand ausgerichtet sein. Sowohl aus fertigungstechnischer Hinsicht als auch in strömungstechnischer Hinsicht hat sich jedoch eine parallele Ausrichtung der beiden Leitwände als vorteilhaft erwiesen.

So kann die gesamte Überleiteinrichtung insgesamt durch ein U-förmig gebogenes Metallblech mit zwei Schenkeln und einem Steg dazwischen ausgebildet sein.

Während im Stand der Technik auch nahe des Überleitbereiches eine möglichst enge Führung der Manteleinrichtung an der Bahn der Schneidmesser vorgesehen ist, ist bei einer weiteren Ausgestaltung der Erfindung bevorzugt, dass sich die Manteleinrichtung in den letzten Winkelbereichen kurz vor dem Überleitbereich nicht mehr in Umfangsrichtung, sondern in tangentialer Richtung hin zu dem Überleitbereich erstreckt. Dadurch wird bereits das in dem Raum zwischen dem Endbereich des Schneidmessers und der Unterseite mitgeführte Schnittgut nicht weiter in Umfangsrichtung abgelenkt, sondern kann in tangentialer Richtung weiter in die benachbarte Kammer geschleudert werden. Dasjenige Schnittgut, welches dieser Bewegung nicht folgt, wird zum Teil noch durch die erste Leitwand erfasst und ebenfalls in die benachbarte Kammer geleitet. Die gegenüberliegende zweite Leitwand öffnet sich bevorzugt gegenüber dieser tangentialen Richtung um den entsprechenden spitzen Winkel. Hierdurch wird der Luftstrom nicht nur verwirbelt, sondern von seiner tangentialen Richtung weiter radial nach innen zu der Drehachse der benachbarten Schneidkammer geleitet. Insgesamt kann man durch die schräge Anordnung in einem spitzen Winkel relativ zur Tangentialrichtung des überzuleitenden Grasschnittgutes auch einen größeren Abstand zwischen den beiden Leitwänden vorsehen und damit einen größeren Überleitungsquerschnitt.

Der Winkel der ersten oder der mehreren Leitwände zur Tangentialrichtung beträgt vorzugsweise zwischen 10° - 30°, mehr insbesondere etwa 15° - 18°. Hierbei wird auf eine Tangentialrichtung Bezug genommen, die sich durch Anlegen einer Tangente an die Kreisbahn des Schneidmesser-Endes in einem Winkelabstand von etwa 10° - 60°, vorzugsweise etwa 15° - 45° vor Erreichen des Überleitbereiches ergibt.

Das Mulchmähdeck kann beispielsweise mit zwei nebeneinander angeordneten Schneidkammern versehen sein, in denen jeweils mittig ein Schneidmesser drehbar gelagert ist. Vorzugsweise sind wenigstens drei Schneidkammern vorgesehen, so dass sich zwei Überleitbereiche ergeben. In beiden Überleitbereichen ist dann vorzugsweise die erfindungsgemäße Überleiteinrichtung vorgesehen.

Die Leitwände erstrecken sich vorzugsweise senkrecht zu den Rotationsebenen der jeweiligen Schneidmessern von der Unterseite des Schneiddecks abstrebend hin zu der Rotationsebene der Schneidmesser, und sie enden dort kurz oberhalb der Rotationsebene. Je nach Abstand der Schneidmesser von der Unterseite des Schneiddecks ergibt sich so eine Höhe der Leitwände von 30 - 50 mm.

Der Teil des Grasschnittgutes, welcher von einer Schneidkammer in die benachbarte Schneidkammer überführt wird, ist von der radialen Erstreckung der Leitwand abhängig. Um eine gleichmäßige Verteilung des Grasschnittguts quer über das gesamte Mähdeck zu erreichen, wird eine radiale Erstreckung, also eine Länge der radialen Richtungskomponente der Leitwand bevorzugt, welche zwischen einem Sechstel und einem Drittel des Radius der jeweiligen Schneidkammer beträgt.

Wie im Stand der Technik gemäß der EP 0 748 154 B1 bekannt, kann ein Teil der Manteleinrichtung, insbesondere ein vorderseitiger Bereich fest an einem Gehäuse des Schneiddeckes angeordnet sein und ein anderer Teil der Manteleinrichtung kann entfernbar an dem Gehäuse befestigt sein. Wenn beispielsweise ein rückwärtiger Teil der Manteleinrichtung entfernbar ausgebildet ist, so lässt sich aus dem Mulchmähdeck durch Entfernen dieses rückwärtigen Teils und Ersetzen durch eine Auswurfführung ein Heckauswurf-Mähdeck bilden. In diesem Fall sind auch die Überleiteinrichtungen entbehrlich, warum diese auch bevorzugt lösbar an dem Gehäuse befestigt sind.

Andererseits kann man den Anteil des zu überleitenden Schnittgutes auch dadurch steuern, dass man die Leitwand nicht überall mit gleicher Höhenerstreckung, sondern mit von innen nach außen ansteigender Höhenerstreckung ausbildet. Um einerseits eine mehrfache und wirksame Zirkulation der Schnittpartikel innerhalb der Schneidkammern zu ermöglichen, andererseits eine schnelle Verteilung von Grasschnittgut auch bei unregelmäßig hohem Gras zu erreichen, ist daher bevorzugt, dass die erste Leitwand und gegebenenfalls auch die zweite Leitwand von ihrem näher zu der Drehachse liegenden Ende bis zu ihrem nahem der benachbarten Schneidkammer liegenden Ende mit ansteigender Höhenerstreckung ausgebildet ist.

Um weiter das Grasschnittgut in einem Bereich nahe der Schneidmesserenden zu halten, um so den Mehrfachschnitt zu verbessern und zu vervielfältigen, und andererseits die Drehlagerung der Schneidmesser gegenüber zu starken Verschmutzungen zu schützen, ist weiter bevorzugt auch eine innere, ringförmige Schneidkammerbegrenzung vorgesehen, so dass die Schneidkammern insgesamt ringförmig ausgebildet sind.

Ein Ausführungsbeispiel der Erfindung wird nachfolgend anhand der beigefügten Zeichnungen näher erläutert. Darin zeigt:
- Fig. 1: eine perspektivische Ansicht von unten und von einer Seite eines Mulchmähdecks;
- Fig. 2: eine weitere perspektivische Ansicht des Mulchmähdecks von Fig. 1; und
- Fig. 3: eine Unteransicht auf das Mulchmähdeck; und
- Fig. 4: eine horizontale Schnittansicht entlang der Linie IV-IV von Fig. 3.

In den Figuren ist ein insgesamt mit 10 gekennzeichnetes Mulchmähdeck gezeigt. Das Mulchmähdeck 10 ist in bekannter Weise für den Anbau an eine fahrbare Einheit, beispielsweise für den Anbau an einen Traktor, ausgebildet. Entsprechende Anbaueinrichtungen sind bekannt und hier nicht näher dargestellt.

Das Mulchmähdeck 10 hat ein insgesamt mit 12 bezeichnetes Gehäuse mit einer Unterseite 14 und einer sich von der Unterseite 14 nach unten erstreckenden Manteleinrichtung 16. Die Manteleinrichtung hat eine fest mit dem Gehäuse 12 verbundene Vorderwand 18 sowie eine Rückwand 20. Durch die Manteleinrichtung 16 sind so insgesamt drei Schneidkammern 22, 23, 24 mit jeweils einem balkenähnlichen Schneidmesser 26, 27, 28 gebildet. Die Schneidmesser 26, 27, 28 sind an einer Drehlagerung 30 um eine senkrecht zur Unterseite 14, in bestimmungsgemäßen Gebrauch vertikal verlaufende Drehachse 32, 33, 34 rotierend gelagert. Die Vorderwand 18 und die Rückwand 20 haben jeweils um die entsprechende Drehachse 31, 33, 34 kreisbogenförmig herumgeführte Mantelbereiche 36 - 41, welche einen Großteil der Schneidkammern 22, 23, 24 kreiszylindermantelförmig begrenzen. Um jede Drehachse 32, 33, 34 herum begrenzen Ringwände 42 die Schneidkammern 22, 23, 24 innenseitig. Die Mantelbereiche 40, 41, 42 der Rückwand 20 haben jeweils einen feststehenden, mit dem Gehäuse 12 fest verbundenen Teil 44 sowie einen mittels Schrauben 45 entfernbar befestigten Abdeckteil 46. Durch Entfernen des Abdeckteils 46 lässt sich so ein Teil der Rückwand 20 öffnen, um das Mulchmähdeck 10 zu einer Heckauswurfart umzubauen.

Die mittlere Schneidkammer 23 ist nach vorne hin versetzt zu den beiden seitlichen Schneidkammern 22, 24. Die Schneidkammern 22, 23, 24 sind so nahe zueinander geführt, dass sich die Rotationsbahnen der Schneidmesser 26, 27, 28 fast berühren, aber doch zueinander beabstandet sind. In diesen Bereichen, in denen sich die Rotationsbahnen der Schneidmesser 26, 27, 28 einander annähern, ist die Manteleinrichtung 16 ausgespart, so dass die Schneidkammern 22, 23, 24 zueinander offen sind. Diese Bereiche, in denen die Manteleinrichtung 16 ausgespart ist, werden im folgenden als Überleitbereiche 48 bezeichnet.

In jedem der beiden Überleitbereiche 48 ist jeweils eine insgesamt mit 50 bezeichnete Überleiteinrichtung zum gezielten Überleiten von durch die Schneidmesser 26, 27, 28 geschnittenem Schnittgut in die jeweils benachbarte Schneidkammer 22, 23, 24 vorgesehen.

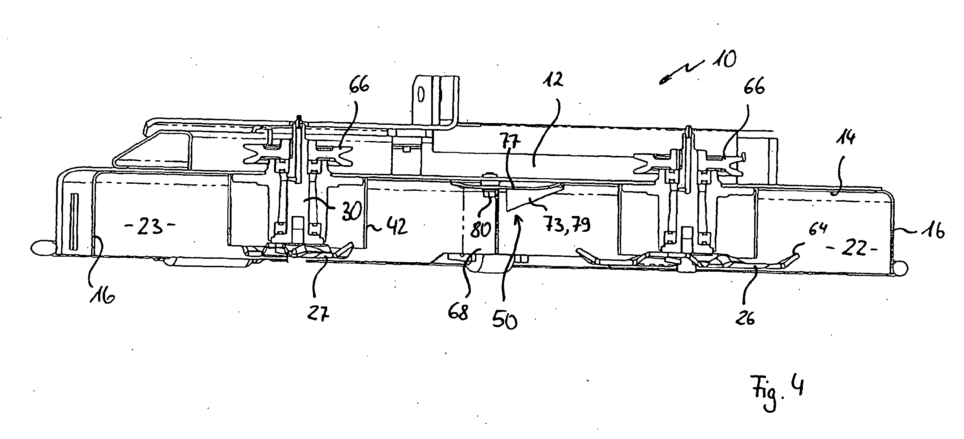

Die Schneidmesser 26, 27, 28 sind im wesentlichen gleich zueinander ausgebildet. Dabei ist ein radial innerhalb der Ringwände 42 angeordneter Lagerbereich 52 gekröpft zu einem radial außerhalb der Ringwände 42 angeordneten Schneidbereich 54 ausgebildet. Der Schneidbereich 54 hat radial von innen nach außen gesehen an einer in Bewegungsrichtung vorderen Kante zunächst eine schräg nach oben herausgebogene Erhöhung 56 und im Anschluss daran eine geschliffene Schneidkante 58, welche in einem Schneidmesserendbereich 60 erstreckend vorgesehen ist. Die in Bewegungsrichtung nachfolgende Kante ist an jedem Schneidmesserende 62 mit einem nach oben abgebogenen Flügel 64 versehen. Diese flügelähnlichen Abwinkelungen, dienen, wie dies bei solchen Schneidmessern üblich ist dazu, einen Luftstrom nach oben zu erzeugen, um die Grashalme zum Schneiden aufzurichten. Die hierzu radial nach innen versetzt, in entgegengerichteter Richtung geneigten Erhöhungen 56 sorgen für eine entgegengesetzte Luftströmung weiter radial innen und somit insgesamt für eine Verwirbelung innerhalb der Schneidkammern 22, 23, 24. Die Schneidmesser 26, 27, 28 drehen angetrieben über ein Keilgetriebe, von welchem in Fig. 4 zwei Keilriemenscheiben 66 gezeigt sind, alle in der gleichen Drehrichtung, so dass sich in den Überleitbereichen 48 die Schneidmesserenden 62 gegenläufig bewegen.

Die Mantelbereiche 36-41 der Manteleinrichtung 16 sind größtenteils kreisbogenförmig mit einem Radius, der geringfügig größer ist als der Abstand des Schneidmesserendes 62 von der jeweiligen Drehachse 32, 33, 34, so dass die Manteleinrichtung 16 das Grasschnittgut eng auf den von den Schneidmessern 26, 27, 28 überstrichenen Schneidbereich begrenzt. Abweichend von dieser Kreisbogenform weist jedoch der jeweils in Bewegungsrichtung des zugeordneten Schneidmessers 26, 27, 28 zu dem jeweiligen Überleitbereich 48 hin führende Endbereich des Mantelbereiches 37, 38 bzw. 39, 40 in eine tangentiale Richtung. Dieser jeweilige Endbereich 68 ist also ein Stück weit geradlinig geformt, so dass sich die Schneidkammern 22, 23, 24 zu den Überleitbereichen 48 hin in Bewegungsrichtung des jeweiligen Schneidmesserendes 62 erweitern. Die Richtungserstreckung dieser Endbereiche 68 erhält man dadurch, dass man an die Kreisbogenform der Manteleinrichtung 16 einige Winkelgrade, zum Beispiel 15-45° vor dem Überleitbereich 48 eine Tangentiale anlegt und die Manteleinrichtung 16 weiter dieser Tangentiale folgen lässt.

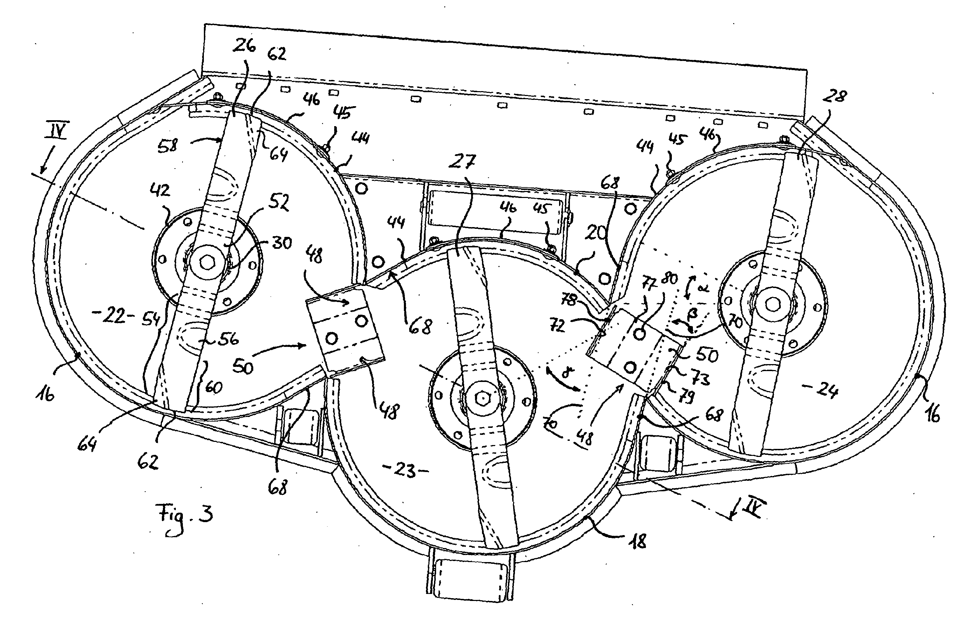

In dem dargestellten Beispiel beträgt der Winkelabstand, über den der Endbereich 68 tangential geführt ist, 15°, wie in Fig. 3 mit dem Winkel α angedeutet. Wie in Fig. 3 weiter durch gepunktete Linien 70 angedeutet, erstrecken sich die beiden geradlinigen Endbereiche 68 in jedem Überleitbereich 48 etwa parallel.

Die Überleiteinrichtung 50 hat in jeweils einer der Schneidkammern 22, 23 bzw. 23, 24, zwischen denen sie sich erstreckt, jeweils eine erste Leitwand 72 und in der anderen der beiden benachbarten Schneidkammern eine zweite Leitwand 73.

In dem dargestellten Beispiel sind, wie sich am besten aus Fig. 3 ergibt, die Leitwände 72, 73 parallel zueinander angeordnet. Die Leitwände 72, 73 erstrecken sich jedoch nicht parallel zu der tangentialen Erstreckung 70 der Endbereiche 68, sondern mit einem spitzen Winkel hierzu, im Beispiel mit einem Winkel β von etwa 15° bis 18°. Es wird hier auf die zeichnerische Darstellung in Fig. 3 ausdrücklich Bezug genommen. Die Leitwände 72, 73 erstrecken sich weiter in einem spitzen Winkel γ zu jeder durch den Überleitbereich 48 verlaufenden gedachten radialen Linie, die die Drehachse 32, 33, 34 der Schneidkammer 22, 23, 24 kreuzt, in der sich die jeweilige Leitwand 72, 73 befindet.

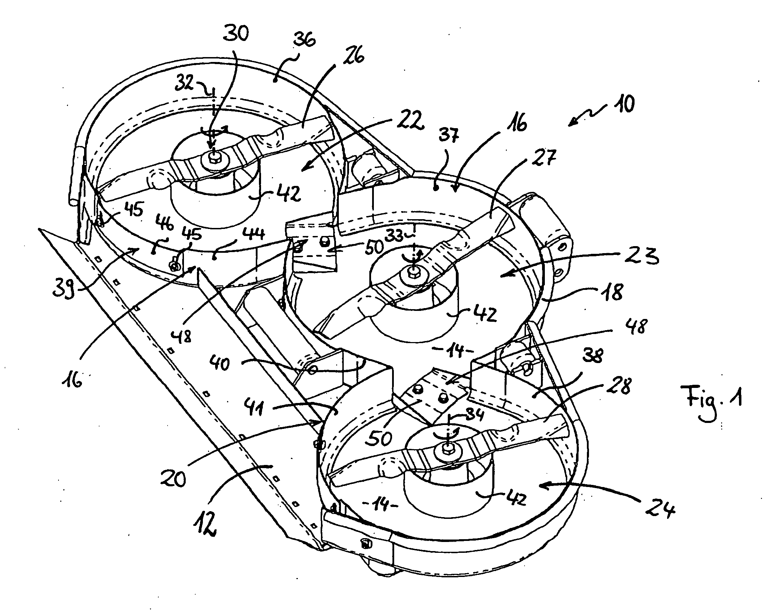

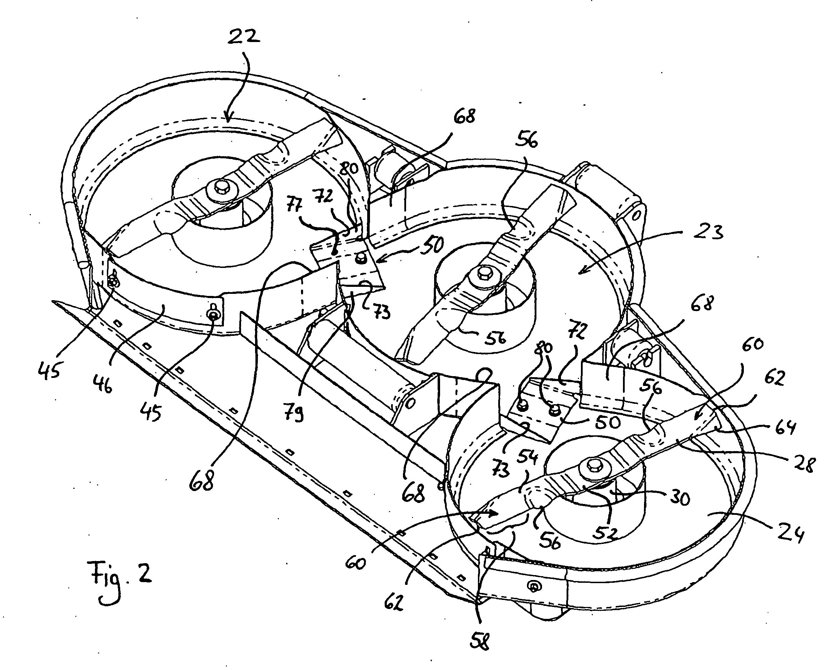

Wie sich aus den Fig. 1, 2, und 4 ergibt, sind die beiden dünnen, oben scharfkantig abschließenden Leitwände 72, 73 nicht mit einer gleichbleibenden Höhenerstreckung versehen, vielmehr steigt die Höhenerstreckung der Leitwände 72, 73 von radial innen nach außen gesehen von nahe Null bis auf einige Zentimeter, beispielsweise 30 - 50 mm, an.

Die Überleiteinrichtung 50 ist insgesamt durch ein Metallblech 76 gebildet, das an seinen Enden im rechten Winkel abgewinkelt ist. Hierdurch ergibt sich in etwa eine U-Form mit einem Steg 77 und zwei davon endseitig rechtwinklig abragenden Schenkeln 78, 79. Die Schenkel 78, 79 bilden dann die jeweiligen Leitwände 72, 73. Der Steg 77 dient zur lösbaren Befestigung mittels zweier Schrauben 80 an der Unterseite 14 des Gehäuses 12. Wie sich aus Fig. 4 ergibt ist zur sicheren Befestigung der Steg 77 mit einem durchgängigen mittleren Bereich etwas nach unten gekröpft, wobei zwischen der Unterseite 14 des Gehäuses 12 und dem Steg 77 eine Unterlegscheibe an den Schrauben 80 angeordnet ist.

Die Überleiteinrichtungen 50 sind so bei dem Mulchmähdeck 10 als Leitbleche ausgebildet, welche gezielt und horizontal abstrebend eine Überführung eines Teils des Grasschnittgutes von einer Schneidkammer 22 in eine benachbarte Schneidkammer 23 leiten.

## Patentansprüche

1. Mulchmähdeck (10) mit mehreren durch eine Manteleinrichtung (16) zu einem Großteil im wesentlichen kreiszylinderförmig begrenzten Schneidkammern (22-24) und mit je wenigstens einem Schneidmesser (26-28) in jeder Schneidkammer, wobei jedes Schneidmesser um eine Drehachse (32-34) rotierend mit Abstand zu einer Unterseite (14) des Mulchmähdecks (10) gelagert ist,
wobei die Manteleinrichtung (16) zwischen zwei benachbarten Schneidkammern (22-24) zum Überleiten von Schnittgut von der einen Schneidkammer in die benachbarte andere Schneidkammer offen ist und in oder an diesem durch die Manteleinrichtung (16) ausgesparten Überleitbereich (48) eine Überleiteinrichtung (50) zum gezielten Überleiten von Grasschnittgut von einer Schneidkammer zu der anderen Schneidkammer angeordnet ist,
**dadurch gekennzeichnet,**
**dass** die Überleiteinrichtung (50) in wenigstens einer der benachbarten Schneidkammern (22-24) eine erste Leitwand (72) aufweist, die sich oberhalb einer Bewegungsbahn eines Schneidmesserendbereichs (60) von etwa der Unterseite (14) des Mulchmähdecks (10) ausgehend im wesentlichen senkrecht zu der Rotationsebene des Schneidmessers (26-28) zu der Bewegungsbahn hin gerichtet erstreckt und sich zu einer tangentialen Bewegungsrichtung (70) des in den Überleitbereich eintretenden Schneidmesserendes (62) einen spitzen Winkel (β) bildend zum Überleiten des Schnittgutes in Richtung auf die andere Schneidkammer erstreckt.

2. Mulchmähdeck nach Anspruch 1,
**dadurch gekennzeichnet,**
**dass** sich die erste Leitwand (72) in einer Richtung erstreckt, die zu einer gedachten radialen Verbindungslinie zwischen der Drehachse (32-34) dieser Schneidkammer (22-24) und dem Überleitbereich (48) einen spitzen Winkel (γ) einschließt.

3. Mulchmähdeck nach einem der voranstehenden Ansprüche,
**dadurch gekennzeichnet,**
**dass** die Manteleinrichtung (16) mit den die benachbarten Schneidkammern (22-24) begrenzenden Mantelbereichen (36-41) an einer Seite des Überleitbereichs (48) in einer ersten Spitze ausläuft, wobei die erste Leitwand (72) an oder nahe dieser Spitze endet.

4. Mulchmähdeck nach einem der voranstehenden Ansprüche,
**dadurch gekennzeichnet,**
**dass** die Überleiteinrichtung (50) in der jeweils anderen, benachbarten Schneidkammer eine zur tangentialen Verlängerung der Bewegungsbahn (70) des Schneidmesserendes (62) des dortigen Schneidmessers und zu einer gedachten radialen Verbindungslinie zwischen dem Überleitbereich und der dortigen Drehachse spitzwinkelig geneigte zweite Leitwand (73) aufweist, zum Überleiten von Schnittgut aus der anderen Schneidkammer in die eine Schneidkammer.

5. Mulchmähdeck nach einem der voranstehenden Ansprüche,
**dadurch gekennzeichnet,**
**dass** die Überleiteinrichtung (50) durch ein etwa L-förmig oder etwa U-förmig abgewinkeltes flächiges Material, insbesondere Metallblech (76), mit einem bzw. zwei Schenkel(n) (78, 79), der bzw. die von einem Steg (77) abgewinkelt ist bzw. sind, gebildet ist, wobei der oder die Schenkel die erste Leitwand (72) bzw. die erste und die zweite Leitwand (72, 73) bilden und der Steg an der Unterseite (14) des Mulchmähdecks (10) befestigt ist.

6. Mulchmähdeck nach einem der voranstehenden Ansprüche,
**dadurch gekennzeichnet,**
**dass** die Überleitbereiche (48) von der Unterseite des Mulchmähdecks (10) ausgehend nach unten hin vollständig offen sind.

7. Mulchmähdeck nach einem der voranstehenden Ansprüche,
**dadurch gekennzeichnet,**
**dass** die Überleiteinrichtung (50) zwei mit Abstand parallel zueinander verlaufende Leitwände (72, 73) aufweist.

8. Mulchmähdeck nach einem der voranstehenden Ansprüche,
**dadurch gekennzeichnet,**
**dass** eine radial gerichtete Erstreckungskomponente der ersten Leitwand (72) eine Länge zwischen etwa einem Sechstel bis etwa einem Drittel des Radius der Schneidkammer (22-24) aufweist.

9. Mulchmähdeck nach einem der voranstehenden Ansprüche,
**dadurch gekennzeichnet,**
**dass** wenigstens eine mittlere Schneidkammer (23) vorgesehen ist, die zu ihren beiden Außenseiten jeweils zu einer weiteren Schneidkammer (22, 24) unter Bildung des Überleitbereiches (48) benachbart ist, wobei an beiden Überleitbereichen (48) jeweils die wenigstens mit der ersten Leitwand (72) versehene Überleiteinrichtung vorgesehen ist.

10. Mulchmähdeck nach einem der voranstehenden Ansprüche,
**dadurch gekennzeichnet,**
**dass** in oder an dem oder den Überleitbereichen (48) die Bewegungsbahnen der Schneidmesserenden (62) der Schneidmesser (26-28) der jeweils benachbarten Schneidkammern gegenläufig gerichtet sind.

11. Mulchmähdeck nach einem der voranstehenden Ansprüche,
**dadurch gekennzeichnet,**
**dass** ein in Bewegungsrichtung des Schneidmesserendes des zugeordneten Schneidmessers hin zu einem Überleitbereich auslaufender Wandbereich (68) der Manteleinrichtung (16) in etwa in zu der Bewegungsrichtung tangentialer Richtung erstreckend verläuft, so dass sich die Schneidkammer (22-24) nahe des Überleitbereiches (48) abweichend von der kreiszylinderwandförmigen Begrenzung erweitert.

12. Mulchmähdeck nach einem der voranstehenden Ansprüche,
**dadurch gekennzeichnet,**
**dass** sich die erste Leitwand (72) senkrecht zur Rotationsebene des zugeordneten Schneidmessers und um etwa 10° bis 20°, vorzugsweise etwa 15°-18°, hin zu der zugeordneten Drehachse, geneigt zu einer Tangentialen zur Bewegungsbahn des Schneidmesserendes (62), bezogen auf eine Winkelstellung des Schneidmessers von etwa 10° bis 60°, vorzugsweise etwa 15 bis 45° vor Erreichen des Überleitbereichs (48), erstreckt.

## Claims

1. Mulching mower deck (10) having a plurality of cutting chambers (22-24) predominantly delimited into substantially circular-cylindrical shapes by a casing device (16), and having at least one cutting blade (26-28) in each cutting chamber, each cutting blade being mounted to be rotatable about a rotation axis (32-34) at a spacing from an underside (14) of the mulching mower deck (10),
the casing device (16) being open between two adjacent cutting chambers (22-24) for transferring cuttings from one cutting chamber into the adjacent other cutting chamber, and in or on this transfer region (48) cut out through the casing device is mounted a transfer device (50) for the controlled transfer of grass cuttings from one cutting chamber to the other cutting chamber,
**characterised in that**
the transfer device (50) comprises, in at least one of the adjacent cutting chambers (22-24), a first guide wall (72) which extends above a path of movement of a cutting blade end region (60) starting from approximately the underside (14) of the mulching mower deck (10), substantially perpendicular to the plane of rotation of the cutting blade (26-28) towards the path of movement and extends towards the other cutting chamber forming an acute angle (β) to a tangential direction of movement (70) of the end (62) of the cutting blade entering the transfer region, for transferring the cuttings.

2. Mulching mower deck according to claim 1, **characterised in that** the first guide wall (72) extends in a direction that encloses an acute angle (γ) to an imaginary radial connecting line between the rotation axis (32-34) of this cutting chamber (22-24) and the transfer region (48).

3. Mulching mower deck according to one of the preceding claims, **characterised in that** the casing device (16) with the casing regions (36-41) adjoining the adjacent cutting chambers (22-24) terminates in a first tip on one side of the transfer region (48), the first guide wall (72) ending at or close to this tip.

4. Mulching mower deck according to one of the preceding claims, **characterised in that** the transfer device (50) comprises, in the other, adjacent cutting chamber, a second guide wall (73) inclined at an acute angle to the tangential extension of the path of movement (70) of the end (62) of the respective cutting blade and to an imaginary radial connecting line between the transfer region and the respective rotation spindle, for transferring cuttings from the other cutting chamber into the one cutting chamber.

5. Mulching mower deck according to one of the preceding claims, **characterised in that** the transfer device (50) is formed by a sheet material, particularly sheet metal (76), bent substantially into an L shape or U shape, having one or two side pieces (78, 79) which is or are bent away from a web (77), wherein the side piece or side pieces form the first guide wall (72) or the first and second guide wall (72, 73) and the web is secured to the underside (14) of the mulching mower deck (10).

6. Mulching mower deck according to one of the preceding claims, **characterised in that** the transfer regions (48) starting from the underside of the mulching mower deck (10) are fully open in the downward direction.

7. Mulching mower deck according to one of the preceding claims, **characterised in that** the transfer device (50) has two guide walls (72, 73) extending parallel to one another.

8. Mulching mower deck according to one of the preceding claims, **characterised in that** a radially directed component of the first guide wall (72) has a length of approximately between one sixth and one third of the radius of the cutting chamber (22-24).

9. Mulching mower deck according to one of the preceding claims, **characterised in that** at least one central cutting chamber (23) is provided which is adjacent to a further cutting chamber (22, 24) on both its outer sides, forming the transfer region (48), while the transfer device comprising at least the first guide wall (72) is provided at each of the two transfer regions (48).

10. Mulching mower deck according to one of the preceding claims, **characterised in that** the paths of movement of the ends (62) of the cutting blades (26-28) of the adjacent cutting chambers run in opposite directions in or on the transfer region or regions (48).

11. Mulching mower deck according to one of the preceding claims, **characterised in that** a wall portion (68) of the casing device (16) terminating in a transfer region in the direction of movement of the end of the associated cutting blade extends substantially in a direction tangential to the direction of movement, so that the cutting chamber (22-24) broadens out close to the transfer region (48), departing from the cylindrical boundary.

12. Mulching mower deck according to one of the preceding claims, **characterised in that** the first guide wall (72) extends perpendicularly to the plane of rotation of the associated cutting blade and inclined at about 10° to 20°, preferably about 15°-18°, to the associated rotation axis, relative to a tangent to the path of movement of the end (62) of the cutting blade, based on an angular setting of the cutting blade of about 10° to 60°, preferably about 15 to 45° before reaching the transfer region (48).

## Revendications

1. Carter de faucheuse de paillage (10) comportant plusieurs chambres de coupe (22-24) délimitées principalement par une installation d'enveloppe (16) en grande partie en forme de cylindre circulaire, et dans chaque chambre de coupe au moins un couteau (26-28), chaque couteau (32-34) étant monté en rotation à une certaine distance de la face inférieure (14) du carter (10), l'installation d'enveloppe (16) étant ouverte entre deux chambres de coupe (22-24) voisines pour transférer le produit coupé d'une chambre à la chambre voisine et la zone de transfert (48) dégagée dans l'installation d'enveloppe (16), il est prévu une installation de transfert (50) pour transférer de manière ciblée, l'herbe coupée d'une chambre de coupe à l'autre chambre de coupe,
**caractérisé en ce que**
l'installation de transfert (50) comporte au moins une première paroi de guidage (72) dans l'une des chambres de coupe voisines (22-24), cette paroi se situant au-dessus de la trajectoire de la zone terminale (60) du couteau, en partant sensiblement de la face inférieure (14) du carter (10) pour s'étendre pratiquement perpendiculairement au plan de rotation du couteau (26-28) par rapport à la trajectoire et formant un angle aigu (β) par rapport à l'extrémité (62) du couteau pénétrant dans la direction de mouvement tangentiel (70) de la zone de transfert, pour guider les produits de coupe en direction de l'autre chambre de coupe.

2. Carter de faucheuse de paillage selon la revendication 1,
**caractérisé en ce que**
la première paroi de guidage (72) s'étend dans une direction faisant un angle aigu (β) par rapport à la ligne radiale géométrique reliant l'axe de rotation (32-34) de cette chambre de coupe (22-24) et la zone transitoire (48).

3. Carter de faucheuse de paillage selon l'une des revendications précédentes,
**caractérisé en ce que**
l'installation d'enveloppe (16) se poursuit avec les zones d'enveloppe (36-41) délimitant les chambres de coupe voisines (22-24), d'un côté de la zone transitoire (48) par une première pointe, la première paroi de guidage (72) se terminant sur ou à proximité de cette pointe.

4. Carter de faucheuse de paillage selon l'une des revendications précédentes,
**caractérisé en ce que**
l'installation de transfert (50) comporte dans chaque autre chambre de coupe voisine, une seconde paroi de guidage (73) inclinée suivant un angle aigu par rapport au prolongement tangentiel de la trajectoire (70) de l'extrémité (62) du couteau correspondant et d'une ligne de liaison radiale, géométrique entre la zone de transfert et l'axe de rotation correspondant, pour transférer le produit coupé de l'autre chambre de coupe dans celle-ci.

5. Carter de faucheuse de paillage selon l'une des revendications précédentes,
**caractérisé en ce que**
l'installation de transfert (50) est formée par un matériau plat, replié, sensiblement en forme de L ou sensiblement en forme de U, notamment une tôle (76), avec une ou deux branches (78, 79) repliées par rapport à la ou aux entretoises (77), et la ou les branches forment la première paroi de guidage (72) ou la première et la seconde paroi de guidage (72, 73) et l'entretoise est fixée au côté inférieur (14) du carter (10).

6. Carter de faucheuse de paillage selon l'une des revendications précédentes,
**caractérisé en ce que**
les zones de transfert (48) sont complètement ouvertes vers le bas en partant du côté inférieur du carter (10).

7. Carter de faucheuse de paillage selon l'une quelconque des revendications précédentes,
**caractérisé en ce que**
l'installation de transfert (50) comporte deux parois de guidage (72, 73) parallèles et distantes l'une par rapport à l'autre.

8. Carter de faucheuse de paillage selon l'une quelconque des revendications précédentes,
**caractérisé en ce que**
la composante d'extension dirigée radialement de la première paroi de guidage (72) a une longueur comprise entre environ 1/6 et environ 1/3 du rayon de la chambre de coupe (22-24).

9. Carter de faucheuse de paillage selon l'une des revendications précédentes,
**caractérisé par**
au moins une chambre de coupe intermédiaire (23) dont les deux côtés extérieurs sont chacun adjacents à une autre chambre de coupe (22-24) en formant la zone de transfert (48) et dans les deux zones de transfert (48) il est prévu chaque fois au moins une installation de transfert munie au moins de la première paroi de guidage (72).

10. Carter de faucheuse de paillage selon l'une quelconque des revendications précédentes,
**caractérisé en ce que**
dans ou sur la ou les zones transitoires (48), les trajectoires des extrémités (62) des couteaux (26-28) des chambres de coupe adjacentes tournent en sens opposé.

11. Carter de faucheuse de paillage selon l'une quelconque des revendications précédentes,
**caractérisé en ce qu'**
une zone de paroi (68) de l'installation d'enveloppe (16) qui se poursuit dans la direction de mouvement de l'extrémité du couteau correspondant vers une zone transitoire, s'étend sensiblement dans une direction tangentielle à la direction de mouvement de sorte que la chambre de coupe (22-24) proche de la zone de transfert (48) s'élargit en s'écartant de la délimitation en forme de paroi cylindrique à section circulaire.

12. Carter de faucheuse de paillage selon l'une quelconque des revendications précédentes,
**caractérisé en ce que**
la première paroi de guidage (72), perpendiculaire au plan de rotation du couteau associé est inclinée d'environ 10° à 20°, de préférence d'environ 15°-18° par rapport à l'axe de rotation correspondant, et s'étend inclinée par rapport à une tangente à la trajectoire de l'extrémité (62) du couteau rapportée à une position angulaire du couteau d'environ 10° à 60° et de préférence d'environ 15 à 45° en amont de la zone transitoire (48).
